# EUROPÄISCHE PATENTSCHRIFT

(11) **EP 4 263 287 B1**
(45) Veröffentlichungstag und Bekanntmachung des Hinweises auf die Patenterteilung: **11.12.2024**
(21) Anmeldenummer: 21794486.7
(22) Anmeldetag: 13.10.2021
(51) Int. Cl.: B60Q 1/08, B60Q 1/14

(54) **VERFAHREN ZUM ANPASSEN EINER FAHRZEUGBELEUCHTUNG BEIM BEFAHREN EINER BAUSTELLE UND FAHRZEUG**
METHOD FOR ADJUSTING A VEHICLE LIGHTING SYSTEM WHEN DRIVING ON A CONSTRUCTION SITE, AND VEHICLE
PROCÉDÉ DE RÉGLAGE D'UN SYSTÈME D'ÉCLAIRAGE DE VÉHICULE LORS DE LA CONDUITE SUR UN CHANTIER, ET VÉHICULE

(30) Priorität: 18.12.2020 DE 102020007757
(43) Veröffentlichungstag der Anmeldung: 25.10.2023
(73) Patentinhaber: Mercedes-Benz Group AG, 70372 Stuttgart (DE)
(72) Erfinder: GUT, Carsten, 71404 Korb (DE)
(74) Vertreter: Novagraaf Group
(86) Internationale Anmeldenummer: PCT/EP2021/078274
(87) Internationale Veröffentlichungsnummer: WO 2022/128200

(56) Entgegenhaltungen:
- DE-A1- 102006 048 503
- DE-A1- 102011 014 455
- DE-A1- 102017 223 446
- DRIVINGSPIRITUK: "Audi Matrix Laser Headlights - Future Technology", YOUTUBE, 18 February 2015 (2015-02-18), pages 1 pp., XP054977546, Retrieved from the Internet <URL:https://www.youtube.com/watch?v=HtitwsV4fAE> [retrieved on 20170713]

## Beschreibung

Die Erfindung betrifft ein Verfahren zum Anpassen einer Fahrzeugbeleuchtung beim Befahren einer Baustelle nach der im Oberbegriff von Anspruch 1 näher definierten Art sowie ein Fahrzeug nach der im Oberbegriff von Anspruch 8 näher definierten Art.

Um Fahrzeuge auch bei Dunkelheit, beispielsweise nachts, sicher betreiben zu können, verfügen Fahrzeug typischerweise über eine Beleuchtungsvorrichtung. Mit einer solchen Beleuchtungsvorrichtung lässt sich eine Umgebung um das Fahrzeug, insbesondere ein in Fahrtrichtung vor dem Fahrzeug liegender Fahrbahnabschnitt, ausleuchten. Dabei lässt sich situationsabhängig eine Helligkeit des von der Beleuchtungsvorrichtung ausgesendeten Lichts einstellen, sowie eine Ausbreitungsrichtung, in die das Licht geworfen wird und eine Querschnittsfläche, die das Licht dabei einnimmt, verändern. So werden Fahrzeugscheinwerfer innerorts typischerweise mit Abblendlicht betrieben und außerorts, wenn keine Gefahr besteht weitere Verkehrsteilnehmer zu blenden, mit Fernlicht betrieben. Hierdurch wird es einer fahrzeugführenden Person ermöglicht bei Dunkelheit weiter blicken zu können. Indem neben einer Reichweite des von der Beleuchtungsvorrichtung ausgesendeten Lichts auch dessen Helligkeit erhöht wird, lassen sich zudem schwer erkennbare Objekte deutlicher wahrnehmen.

Hierzu kann eine fahrzeugführende Person manuell zwischen Abblendlicht und Fernlicht hin und her schalten. Außerdem sind sogenannte adaptive Fernlichtassistenten bekannt, welche in Abhängigkeit von Sensorsignalen automatisch eine Leuchtweiten- und/oder Helligkeitsregulierung von der Beleuchtungsvorrichtung ausgesendeten Lichts vornehmen. Moderne Fahrzeuge verwenden als Leuchtmittel LEDs, insbesondere in Form von sogenannten Matrixscheinwerfern. Dabei können einzelne LEDs des Matrixscheinwerfers, auch als Pixel bezeichnet, gezielt angesteuert werden, um Bereiche eines von den Matrixscheinwerfern ausgesendeten Lichtkegels auszusparen. So lassen sich zum Beispiel genau die Bereiche des Lichtkegels aussparen, in denen sich weitere Verkehrsteilnehmer befinden. So kann gleichzeitig Fernlicht ausgesendet werden und eine Blendung der weiteren Verkehrsteilnehmer vermieden werden. Ferner ist bekannt, eine Ausbreitungsrichtung von der Beleuchtungsvorrichtung ausgesendeten Lichts beispielsweise durch Bewegen eines Reflektors und/oder einer Linse der Beleuchtungsvorrichtung zu verschieben. Hierdurch lässt sich beispielsweise eine adaptives Kurvenlicht realisieren.

Das Befahren einer Baustelle bei Nacht stellt eine anspruchsvolle Verkehrssituation dar. So ist im Bereich einer Baustelle oftmals eine Fahrbahnbreite reduziert, was eine hohe Aufmerksamkeit einer fahrzeugführenden Person zum Sicheren Betreiben ihres Fahrzeugs erfordert. Dies wird durch schlechte Sichtbedingungen bei Nacht erschwert. Durch eine vergleichsweise hohen Anzahl reflektierender Umgebungsobjekten wie Verkehrszeichen und/oder Warnbaken, welche aufgrund einer retroreflektierenden Beschichtung das von der Beleuchtungsvorrichtung ausgesendete Licht in Richtung des Fahrzeugs bzw. der fahrzeugführenden Person zurückreflektieren, werden fahrzeugführende Personen geblendet. Ferner kann ein Reflektionsvermögen eines erneuerten Fahrbahnbelags gegenüber einem alten Fahrbahnbelag abgemindert sein, wodurch von der Fahrbahn mehr Licht geschluckt wird, wodurch wiederum eine Verkehrssituation im Baustellenbereich dunkler erscheint. Hierdurch können Umgebungsobjekte, Fahrbahnmarkierungen und Ausfahrten schlecht erkannt beziehungsweise leicht übersehen werden.

Aus der DE 10 2011 014 455 A1 ist ein Verfahren und zum Betrieb eines Fahrzeugs mit einer Beleuchtungsvorrichtung bekannt. Gemäß des in der Druckschrift offenbarten Verfahrens wird das Befahren einer Baustelle erkannt und beim Befahren der Baustelle eine Lichtverteilung von Fahrzeugscheinwerfern ausgesendeten Lichts automatisch angepasst. So wird ein statisches Abbiegelicht beim Erkennen einer Baustelle hinzugeschaltet oder ein Kurvenlicht aktiviert, sowie eine Ausbreitungsrichtung des Kurvenlichts bzw. des statischen Abbiegelichts seitlich vom Fahrzeug weggerichtet, um einen Randbereich der Fahrbahn im Baustellenbereich besser ausleuchten zu können. Dabei wird gemäß einer Ausführung der in der Druckschrift offenbarten Erfindung auch eine ausgesendete Lichtleistung erhöht. Hierdurch kann eine fahrzeugführende Person Fahrbahnränder und/oder in einem entsprechenden Bereich befindliche Objekte besser wahrnehmen, wodurch ein sicherer Fahrzeugbetrieb ermöglicht wird. Um das Befahren einer Baustelle zu erkennen, werden von einer Kamera erzeugte Kamerabilder ausgewertet und/oder eine aktuelle Fahrzeugposition mit Kartenmaterial abgeglichen, wobei Baustellenbereiche im Kartenmaterial verzeichnet sind. Zusätzlich oder alternativ kann auch durch eine bestimmte Fahrzeuggeschwindigkeit auf das Befahren einer Baustelle geschlossen werden, da typischerweise in Baustellen ein vermindertes Tempolimit gilt. Ferner kann ein Funksignal, beispielsweise über eine Fahrzeug-zu-X-Kommunikationsschnittstelle an das Fahrzeug versendet werden, um das Fahrzeug über die Baustelle zu informieren. Nachteilig ist dabei jedoch, dass durch das Aufhellen eines seitlichen Fahrbahnrands auch mehr Licht auf reflektierende Objekte wie Verkehrszeichen und Warnbaken geworfen wird, wodurch die fahrzeugführende Person noch stärker geblendet wird.

Ein Fahrzeugbeleuchtungssystem ist auch aus der DE 199 22 735 A1 bekannt. Die Druckschrift beschreibt dabei ein Anpassen vom Fahrzeugbeleuchtungssystem ausgesendeten Lichts in Abhängigkeit aktueller Wetterbedingungen und/oder des Zustands einer Straßenoberfläche. Dabei können zum einen eine Beleuchtungsrichtung und eine Fläche des vom Fahrzeugbeleuchtungssystem ausgesendeten Lichts angepasst werden, sowie eine Helligkeit und/oder Farbe des ausgesendeten Lichts variiert werden. Dabei wird eine Umgebung insbesondere aufgehellt, wenn widrige Witterungsbedingungen wie Regen, Nebel oder Schnee vorliegen. Dabei erfolgt eine Beleuchtungsanpassung auch unter Berücksichtigung von auf der Straßenoberfläche detektierter Nässe. Es können einzelne Scheinwerfer des Fahrzeugs und/oder Bestandteile der Scheinwerfer wie Reflektoren verschwenkt werden und/oder Hilfsscheinwerfer, beispielsweise Nebelscheinwerfer, hinzugeschaltet werden. Ein Anpassen einer Ausbreitungsrichtung und/oder eingenommenen Fläche vom Fahrzeugbeleuchtungssystem ausgesendeten Lichts erfolgt dabei unter anderem in Abhängigkeit eines Lenkwinkels des Fahrzeugs, in Abhängigkeit von Navigationsdaten, woraus auf einen Straßenverlauf geschlossen wird, und durch Auswerten von Kamerabildern, wodurch neben einer Klassifizierung von Witterungsbedingungen auch weitere Verkehrsteilnehmer erkannt werden können. So wird das vom Fahrzeugbeleuchtungssystem ausgesendete Licht auch in Abhängigkeit der weiteren Verkehrsteilnehmer angepasst, um diese nicht zu blenden.

Ferner offenbart die DE 10 2017 223 446 A1 eine Beleuchtungseinrichtung zur Darstellung von Animationen zur Abgrenzung unterschiedlicher Lichtfunktionen. Dabei kann ein Fahrzeug einen Baustellenbereich erkennen und im Baustellenbereich eine Lichtintensität von Abblendlicht erhöhen. Dieses Vorgehen ist auch aus der DE 10 2011 014 455 A1 bekannt, welche ein Verfahren und eine Vorrichtung zum Betrieb eines Fahrzeugs mit einer Beleuchtungsvorrichtung beschreibt sowie aus der DE 10 2006 048 503 A1, welche eine Vorrichtung zur Querführungsunterstützung für ein straßengebundenes Fahrzeug beschreibt.

Der vorliegende Erfindung liegt die Aufgabe zugrunde, ein verbessertes Verfahren zum Anpassen einer Fahrzeugbeleuchtung beim Befahren einer Baustelle anzugeben, bei dem eine fahrzeugführende Person beim Befahren einer Baustelle weniger stark geblendet wird und dabei dennoch eine sonst schwer erkennbare Fahrbahnmarkierung einfacher wahrnehmen kann.

Erfindungsgemäß wird diese Aufgabe durch ein Verfahren zum Anpassen einer Fahrzeugbeleuchtung beim Befahren einer Baustelle mit den Merkmalen des Anspruchs 1 sowie ein Fahrzeug mit den Merkmalen des Anspruchs 8 gelöst. Vorteilhafte Ausgestaltungen und Weiterbildungen ergeben sich aus den hiervon abhängigen Ansprüchen.

Bei einem Verfahren zum Anpassen einer Fahrzeugbeleuchtung beim Befahren einer Baustelle der eingangs genannten Art, wird die Lichtintensität, mit der das Abblendlicht ausgestrahlt wird, beim Befahren der Baustelle auf einen festgelegten Wert erhöht. Erfindungsgemäß wird dabei beim Erkennen einer Ausfahrt ein Lichtbildschwerpunkt in einen der Ausfahrt entsprechenden Umgebungsbereich verschoben oder die vom Lichtbild eingenommene Fläche so erweitert, dass auch der Ausfahrt entsprechende Umgebungsbereich wenigstens bereichsweise beleuchtet wird

Bei Dunkelheit, vor allem nachts, ist eine visuelle Wahrnehmung in einem Baustellenbereich eingeschränkt. Ursachen hierfür sind beispielsweise ein neuer, Licht schlecht reflektierender Asphaltbelag und eine vergleichsweise hohe Anzahl an reflektierenden Umgebungsobjekten wie Verkehrszeichen und/oder Warnbaken. Hierdurch kann eine fahrzeugführende Person gegebenenfalls relevante Fahrbahnmarkierungen schwieriger erkennen, was der fahrzeugführenden Person das Spurhalten erschwert. Ferner kann die fahrzeugführende Person gegebenenfalls Umgebungsobjekte schwerer erkennen und/oder an einer Ausfahrt vorbeifahren, da die fahrzeugführende Person die Ausfahrt zu spät wahrnimmt. Hierdurch kann eine Sicherheit im Straßenverkehr reduziert werden. Mit Hilfe des erfindungsgemäßen Verfahrens lässt sich jedoch auch beim Befahren einer Baustelle des nachts eine ausreichende visuelle Wahrnehmung erreichen. Dabei wird lediglich ein vergleichsweise kleiner Bereich in einer näheren Umgebung in einer Fahrtrichtung vor dem Fahrzeug besonders hell ausgeleuchtet. Durch die erhöhte Lichtintensität können auch schwer erkennbare Objekt sowie Fahrbahnmarkierungen deutlicher wahrgenommen werden. Indem lediglich die Lichtintensität des unteren Lichtfelds, sprich des Abblendlichts, erhöht wird, wird ein Gefährdungspotenzial für die fahrzeugführende Person durch das Reflektieren von den Fahrzeugscheinwerfern ausgesendeten Lichts durch die reflektierenden Umgebungsobjekte reduziert.

Eine Erhöhung der Lichtintensität des Abblendlichts ist dabei auf verschiedene Art und Weise möglich. Beispielsweise werden zusätzliche Leuchtmittel und/oder Leuchten hinzugeschaltet, beispielsweise Nebelscheinwerfer und/oder vorher deaktivierte LEDs bzw. Pixel eines Matrixscheinwerfers. Ebenfalls ist es denkbar, eine Leistung, mit der Leuchtmittel versorgt werden, zu erhöhen. Auch kann ein Versperrelement in einem Strahlengang zwischen Leuchtmittel und Fahrbahn angeordnet sein, welches zur Erhöhung der Lichtintensität wenigstens abschnittsweise aus dem Strahlengang hinausbewegt wird. Dabei ist eine Erhöhung der Lichtintensität sowohl in Stufen als auch stufenlos möglich.

Mit dem Befahren einer Baustelle ist ein beliebiger Zeitpunkt vor, während und auch nach Befahren der Baustelle gemeint. So kann die Lichtintensität bereits in einem festgelegten Abstand vor Erreichen eines die Baustelle andeutenden Verkehrszeichens erhöht werden oder die Lichtintensität erst nachdem das Fahrzeug in der Baustelle eine festgelegte Wegstrecke zurückgelegt hat, erhöht werden. Auch kann die Lichtintensität in Abhängigkeit einer festgelegten Wegstrecke bis zum Ende einer Baustelle erhöht werden und beim Verlassen eines Baustellenbereichs oder nach einer festgelegten Zeitdauer oder Wegstrecke nach Verlassen des Baustellenbereichs wieder in ihren Ursprungszustand zurückversetzt werden. Während die Lichtintensität des Abblendlichts erhöht wird, kann währenddessen auch Fernlicht von den Fahrzeugscheinwerfern ausgestrahlt werden.

Erfindungsgemäß ist vorgesehen, dass beim Erkennen einer Ausfahrt ein Lichtbildschwerpunkt in einen der Ausfahrt entsprechenden Umgebungsbereich verschoben wird oder die vom Lichtbild eingenommene Fläche so erweitert wird, dass auch der Ausfahrt entsprechende Umgebungsbereich wenigstens bereichsweise beleuchtet wird. Aufgrund der baulichen Einschränkungen in einem Baustellenbereich sind oftmals Ausfahrten verschoben oder weisen eine verkürzte und/oder schmalere Spurbreite auf. Hierdurch sind die Ausfahrten im Bereich einer Baustelle manchmal besonders schwer zu erkennen. Insbesondere des nachts besteht dann ein erhebliches Risiko, dass eine fahrzeugführende Person an einer Ausfahrt vorbeifährt. Indem die Ausfahrten beim Befahren der Baustelle stärker beleuchtet werden, wird es der fahrzeugführenden Person ermöglicht, die Ausfahrten besser wahrzunehmen. Hierdurch kann ein Risiko gesenkt werden, dass die fahrzeugführende Person ungewollt an einer Ausfahrt vorbeifährt. Dabei kann zum einen ein von einem Fahrzeugscheinwerfer ausgesendeter Lichtstrahl verschwenkt werden, um die Baustelle zu beleuchten, und/oder es können auch zusätzliche Scheinwerfer bzw. Leuchtmittel hinzugeschaltet werden, um einen der Ausfahrt entsprechenden Umgebungsbereich auszuleuchten. Insbesondere wird nur dann eine Ausfahrt heller ausgeleuchtet, wenn die fahrzeugführende Person beabsichtigt, eine entsprechende Ausfahrt zu nehmen. Dies kann beispielsweise durch Setzen eines Blinkers festgestellt werden. Ferner kann eine Absicht der fahrzeugführenden Person, eine Ausfahrt zu nehmen, auch durch eine Analyse einer geplanten Fahrtroute, beispielsweise einer in ein Navigationssystem des Fahrzeugs eingegebenen Fahrtroute, entnommen werden. Hierdurch wird ein unnötiges Beleuchten irrelevanter Ausfahrten vermieden. Somit lässt sich ein besonders komfortabler Betrieb des Fahrzeugs bzw. der Fahrzeugbeleuchtung beim Befahren einer Baustelle gewährleisten.

Eine vorteilhafte Weiterbildung des Verfahrens sieht vor, dass die Lichtintensität, mit der das Fernlicht ausgestrahlt wird, beim Befahren der Baustelle abgesenkt wird oder das Fernlicht deaktiviert wird. Wie bereits erwähnt wird die fahrzeugführende Person durch von Umgebungsobjekten reflektiertes Licht geblendet. Indem eine Helligkeit des Fernlichts reduziert wird oder besonders vorteilhaft das Fernlicht beim Befahren der Baustelle gänzlich deaktiviert wird, lässt sich auch eine Gefahr, dass die fahrzeugführenden Person durch Reflektieren vom Fahrzeug ausgesendeten Lichts geblendet wird, reduzieren.

Hierdurch ist ein noch sicherer Betrieb des Fahrzeugs beim Befahren einer Baustelle des nachts möglich.

Entsprechend einer weiteren vorteilhaften Ausgestaltung des Verfahrens wird das Befahren der Baustelle durch zumindest eine der folgenden Methoden erkannt:
- Auswerten wenigstens eines von einer Fahrzeugkamera erzeugten Kamerabilds;
- Auswerten eines von einem Radarsystem bereitgestellten Sensorsignals;
- Vergleich einer aktuellen Fahrzeugposition, insbesondere einer mittels eines globalen Navigationssatellitensystem bestimmten Fahrzeugposition, mit Kartenmaterial;
- Auswerten einer aktuellen Fahrzeuggeschwindigkeit; und/oder
- Auswerten eines drahtlosen Baustellenhinweissignals, insbesondere eines über eine Fahrzeug-zu-X-Kommunikationsschnittstelle übertragenen Baustellenhinweissignals.

Mit Hilfe der genannten Methoden ist eine besonders zuverlässige Baustellendetektion möglich. Als Fahrzeugkamera kann dabei eine beliebige Kamera, beispielsweise eine Multipurpose-Kamera, eingesetzt werden. Dabei kann es sich um eine Mono- oder Stereokamera handeln. Insbesondere kann die Fahrzeugkamera neben sichtbarem Licht auch Infrarotlicht erfassen, was eine noch zuverlässigere Bilderkennung bei Dunkelheit gewährleistet. Mit Hilfe des Radarsystems lassen sich auch bei Dunkelheit Abstandsinformationen zuverlässig erfassen. Insbesondere bei niedrigen Geschwindigkeiten und geringen Abständen kann zusätzlich oder alternativ zu einem Radarsystem auch ein Ultraschallsensorsystem zur Abstandsbestimmung eingesetzt werden. Eine Abstandsbestimmung mit Hilfe eines Laserscanners wie einem Lidar ist ebenfalls denkbar. Analog zum Stand der Technik lässt sich ein Baustellenbereich auch durch Abgleich einer aktuellen Fahrzeugposition mit einer in Kartenmaterial eingetragenen Baustellenpositionen vergleichen. Ebenfalls kann das Befahren eines Baustellenbereichs durch eine im Gegensatz zu einer für eine aktuell befahrene Straße untypischen Fahrzeuggeschwindigkeit, beispielsweise Tempo 80 auf einer Autobahn, erkannt werden. Ferner kann das drahtlos übertragene Baustellenhinweissignal auf die Baustelle hindeuten, wobei mit dem Baustellenhinweissignal auch zusätzliche Informationen, beispielsweise eine Baustellenlänge, übermittelt werden können.

Eine weitere vorteilhafte Ausgestaltung des Verfahrens sieht ferner vor, dass der festgelegte Wert in Abhängigkeit eines Fahrbahnzustands, insbesondere eines Straßenbelags und/oder von auf der Fahrbahn detektierter Nässe, verändert wird. Durch Verändern der Lichtintensität des Abblendlichts in Abhängigkeit des Fahrbahnzustands lässt sich eine noch sichere Ausleuchtung des Baustellenbereichs gewährleisten. So kann, je nachdem wie stark der Straßenbelag Licht reflektiert, die Lichtintensität des Abblendlichts erhöht werden. Wurde beispielsweise in einer bestimmten Baustelle der Straßenbelag nicht erneuert, so schluckt dieser auch das von den Fahrzeugscheinwerfern ausgesendete Licht nicht so stark. In diesem Falle ist auch die Lichtintensität des Abblendlichts weniger stark zu erhöhen. Dies gilt auch für Situationen, in denen Nässe auf der Fahrbahn vorliegt. Hat es beispielsweise geregnet oder liegt Schnee auf der Fahrbahn, so steigt ein Reflektionsvermögen der Fahrbahn. Auch in diesem Falle reicht es aus, die Lichtintensität des Abblendlichts weniger stark zu erhöhen. Hierdurch wird auch die Gefahr reduziert, dass Licht von der Fahrbahn in Richtung der Umgebungsobjekte wie Verkehrszeichen und/oder Warnbaken reflektiert wird, wodurch eine Blendungsgefährdung der fahrzeugführenden Person noch weiter reduziert werden kann.

Entsprechend einer weiteren vorteilhaften Ausgestaltung des Verfahrens werden zum Erkennen des Fahrbahnzustands Sensordaten wenigstens einer Fahrzeugkamera und eines Laserscanners fusioniert. Mit Hilfe der Sensorfusion kann der Fahrbahnzustand besonders zuverlässig erkannt werden. Fällt ein Sensorsystem aus oder liefert fehlerhafte Sensorsignale, so können unter Berücksichtigung der vom funktionierenden Sensor bereitgestellten Sensordaten Fehldetektionen vermieden werden. Dabei ist es auch möglich, dass bei der Sensorfusion weitere Sensorsysteme berücksichtigt werden. So können zum Erkennen des Fahrbahnzustands auch zusätzlich von einem Ultraschall- oder Radarsystem ausgegebene Sensorsignale mit den Sensordaten der Fahrzeugkamera und des Laserscanners fusioniert werden.

Entsprechend einer weiteren vorteilhaften Ausgestaltung des Verfahrens wird bei Detektieren wenigstens eines weiteren in einem Fahrzeugumfeld befindlichen Verkehrsteilnehmers eine Beleuchtung wenigstens eines festgelegten Bereichs des Lichtbilds, insbesondere des unteren Lichtfelds, gezielt ausgespart. Hierdurch lässt sich ein unerwünschtes Blenden weiterer Verkehrsteilnehmer verhindern. Dabei können weitere Verkehrsteilnehmer im Fahrzeugumfeld beispielsweise durch Auswerten von Kamerabildern erkannt werden. Ebenso lassen sich die weiteren Verkehrsteilnehmer durch Übertragen bzw. Empfangen eines über eine Fahrzeug-zu-Fahrzeug-Kommunikationsschnittstelle übertragenen Signals erkennen. Zusätzlich oder alternativ kann auch eine Relativposition bzw. ein Relativabstand zwischen dem Fahrzeug und den weiteren Verkehrsteilnehmern bestimmt werden, beispielsweise mit Hilfe eines Abstandserfassungssystems wie einem Laserscanner und/oder einem Abstandsradar. Hierdurch können die Bereiche des Lichtbilds bzw. des unteren Lichtfelds errechnet werden, welche bei der Aussendung des von den Fahrzeugscheinwerfern ausgegebenen Lichts auszusparen sind. Dies ist generell bereits durch adaptive Fernlichtassistenten bekannt. Liegt jedoch Nässe auf der Fahrbahn vor, so reflektiert die Nässe das helle Abblendlicht, wodurch die weiteren Verkehrsteilnehmer aus Richtung der Fahrbahn geblendet werden können. Da speziell die Lichtintensität des Abblendlichts des Fahrzeugs erhöht wird, werden dann die weiteren Verkehrsteilnehmer besonders stark geblendet. Durch Auswerten von Lagebeziehungen der weiteren Verkehrsteilnehmer zum Fahrzeug und unter Berücksichtigung von Reflektionswinkeln zwischen Fahrzeugscheinwerfern, Fahrbahn und den weiteren Verkehrsteilnehmern lassen sich jedoch einzelne Bereiche des auf die Fahrbahn geworfenen hellen Abblendlichts so aussparen, dass die weiteren Verkehrsteilnehmer auch durch von einer nassen Fahrbahn reflektierten Lichts nicht geblendet werden. Hierdurch kann eine Sicherheit im Straßenverkehr noch weiter erhöht werden.

Bevorzugt wird zum Ausstrahlen des Lichtbilds wenigstens ein LED-Scheinwerfer, insbesondere ein Matrixscheinwerfer, verwendet. Generell lässt sich zum Ausstrahlen des Lichtbilds ein beliebiger Fahrzeugscheinwerfer verwenden. Dieser kann als Leuchtmittel beispielsweise Glüh-, Halogen- oder Xenonlampen verwenden. Als Leuchtmittel kommt auch ein Laser in Frage. LEDs weisen jedoch eine besonders hohe Effizienz auf, wodurch ein helles Abblendlicht bei gleichzeitigem geringem Energiebedarf erzeugt werden kann. Mit Hilfe eines Matrixscheinwerfers lässt sich zudem eine Richtung, in die das Lichtbild in die Umgebung geworfen wird, besonders einfach einstellen. So sind hierzu keine beweglichen Teile notwendig, was einen Aufbau des Fahrzeugscheinwerfers vereinfacht und den Fahrzeugscheinwerfer auch robust gegenüber Vibrationen macht. Somit lässt sich eine Zuverlässigkeit, mit der das Lichtbild entsprechend einer vorgesehenen Richtung in die Umgebung geworfen wird, erhöhen.

Bei einem Fahrzeug mit wenigstens einem Scheinwerfer, einem Umfeldüberwachungssystem und einer Recheneinheit ist erfindungsgemäß die Recheneinheit dazu eingerichtet, ein im vorigen beschriebenes Verfahren auszuführen. Bei dem Fahrzeug kann es sich um ein beliebiges Fahrzeug wie einen Pkw, Lkw, Transporter, Bus oder dergleichen handeln. Zum Ausstrahlen des Lichtbilds können dabei einer oder mehrere Fahrzeugscheinwerfer eingesetzt werden. Als Umfeldüberwachungssystem kommen verschiedene Sensorsysteme in Frage. Beispielsweise kann das Fahrzeugumfeld mit Hilfe einer Kamera, eines Radarsystems, eines Laserscanners oder dergleichen überwacht werden. Bei der Recheneinheit kann es sich um eine beliebige Recheneinheit wie einen zentralen Bordcomputer, ein Steuergerät eines Fahrzeuguntersystems oder einen zur Durchführung des Verfahrens separat vorgesehenen Steuerungsrechner handeln. Dabei können Kamerabilder auch unter Einsatz künstlicher Intelligenz, beispielsweise in Form eines künstlichen neuronalen Netzes wie einem Convolutional Neural Network, ausgewertet werden.

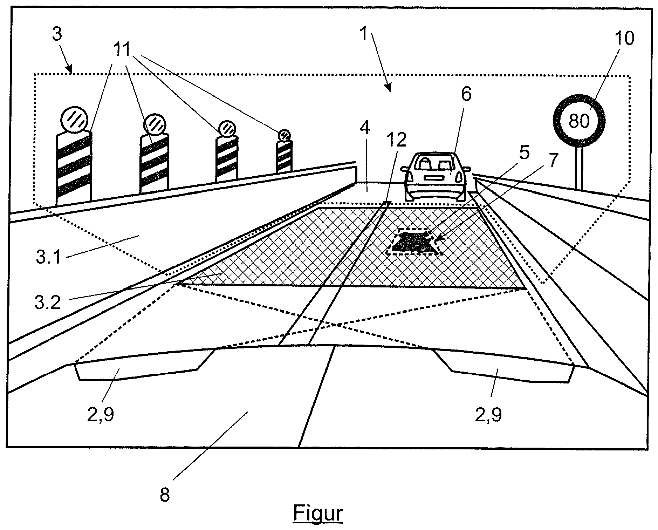

Weitere vorteilhafte Ausgestaltungen des erfindungsgemäßen Verfahrens ergeben sich auch aus dem Ausführungsbeispiel, welches nachfolgend unter Bezugnahme auf die Figur näher beschrieben wird.

Dabei zeigt die einzige Figur ein eine Baustelle bei Nacht befahrendes Fahrzeug aus Sicht einer fahrzeugführenden Person.

Die Figur zeigt ein Fahrzeug 8, welches bei Nacht eine Baustelle 1 befährt. Zum Aufhellen einer Fahrzeugumgebung umfasst das Fahrzeug 8 mehrere Fahrzeugscheinwerfer 2, im Folgenden als Scheinwerfer 9 bezeichnet. Dabei senden die Scheinwerfer 9 Licht zur Erzeugung eines Lichtbilds 3 aus. Das Lichtbild 3 setzt sich aus einem oberen Lichtfeld 3.1 und einem unteren Lichtfeld 3.2 zusammen, wobei das obere Lichtfeld 3.1 Fernlicht entspricht und das untere Lichtfeld 3.2 Abblendlicht. In der Figur werfen die Scheinwerfer 9 lediglich Licht zur Ausbildung des unteren Lichtfelds 3.2 aus.

Beim Befahren einer Baustelle 1 ist oftmals eine visuelle Wahrnehmung der Baustelle 1 eingeschränkt, da ein Fahrbahnbelag einer erneuerten Fahrbahn 4 Licht schlecht reflektiert und eine Vielzahl reflektierender Umgebungsobjekte wie Verkehrszeichen 10 und Warnbaken 11 im Bereich der Baustelle 1 vorgesehen sind, welche von den Scheinwerfer 9 ausgesendetes Licht in Richtung der fahrzeugführenden Person zurückreflektieren, wodurch diese geblendet wird. Es wird eine visuelle Wahrnehmung des Baustellenbereichs 1 verbessert, indem die Scheinwerfer 9 Abblendlicht mit einer im Vergleich zu typischem Abblendlicht erhöhten Leuchtintensität aussenden. Mit Hilfe des helleren Abblendlichts lässt sich auch ein Licht schluckender Fahrbahnbelag aufhellen, und zudem das Blenden der fahrzeugführenden Person vermeiden, indem reflektierende Umgebungsobjekte wie die Verkehrszeichen 10 und die Warnbaken 11 nicht beleuchtet werden. Hierdurch wird es der fahrzeugführenden Person ermöglicht, Fahrbahnmarkierungen 12 besser wahrzunehmen, wodurch die fahrzeugführende Person auch eine von ihr befahrene Fahrspur einfacher halten kann. Hierdurch wird auch ein Fahrkomfort beim Befahren der Baustelle verbessert.

Dabei kann es vorkommen, dass auf der Fahrbahn 4 reflektierende Bereiche vorliegen, beispielsweise in Form von Nässe 5. Von den Scheinwerfern 9 ausgesendetes Licht wird dabei von der Nässe 5 in Richtung weiterer Verkehrsteilnehmer 6 reflektiert, wodurch diese geblendet werden. Da das mit Hilfe des erfindungsgemäßen Verfahrens ausgesendete Abblendlicht besonders hell ist, werden auch die weiteren Verkehrsteilnehmer 6 stark geblendet. Um dies zu vermeiden, lassen sich einzelne Bereiche 7 des Lichtbilds 3, bevorzugt des unteren Lichtfeld 3.2, aussparen. Somit lässt sich zuverlässig ein Blenden der weiteren Verkehrsteilnehmer 6 vermeiden. Zum Berechnen der auszusparenden Bereiche 7 werden beispielsweise Kamerabilder der in der Figur gezeigten Szene erzeugt und ausgewertet. Hierdurch lassen sich die weiteren Verkehrsteilnehmer 6, als auch die Nässe 5 erkennen und Lagebeziehungen zwischen den Verkehrsteilnehmern 6, der Nässe 5 und dem Fahrzeug 8 bzw. den Scheinwerfern 9 berechnen, was ein adaptives Aussparen der Bereiche 7 ermöglicht. Zusätzlich können hierbei weitere Sensordaten berücksichtigt werden, beispielsweise mit einem Radar oder Laserscannersystem erzeugte Abstandsinformationen.

Erfindungsgemäß wird eine Ausfahrt im Bereich einer Baustelle 1 stärker ausgeleuchtet (nicht dargestellt).

## Patentansprüche

1. Verfahren zum Anpassen einer Fahrzeugbeleuchtung beim Befahren einer Baustelle (1), wobei ein von wenigstens einem Fahrzeugscheinwerfer (2) in eine Umgebung geworfenes Lichtbild (3) aus einem oberen (3.1) als Fernlicht bezeichneten und einem unteren als Abblendlicht bezeichnetem Lichtfeld (3.2) bei Erkennen des Befahrens einer Baustelle (1) angepasst wird, indem eine Lichtintensität, mit der das Lichtbild (3) erzeugt wird, verändert wird,
wobei
die Lichtintensität, mit der das Abblendlicht ausgestrahlt wird, beim Befahren der Baustelle (1) auf einen festgelegten Wert erhöht wird,
**dadurch gekennzeichnet, dass**
beim Erkennen einer Ausfahrt ein Lichtbildschwerpunkt in einen der Ausfahrt entsprechenden Umgebungsbereich verschoben wird oder die vom Lichtbild eingenommene Fläche so erweitert wird, dass auch der Ausfahrt entsprechende Umgebungsbereich wenigstens bereichsweise beleuchtet wird.

2. Verfahren nach Anspruch 1,
**dadurch gekennzeichnet, dass**
die Lichtintensität mit der das Fernlicht ausgestrahlt wird beim Befahren der Baustelle (1) abgesenkt wird oder das Fernlicht deaktiviert wird.

3. Verfahren nach Anspruch 1 oder 2,
**dadurch gekennzeichnet, dass**
das Befahren der Baustelle (1) durch zumindest eine der folgenden Methoden erkannt wird:
Auswerten wenigstens eines von einer Fahrzeugkamera erzeugten Kamerabilds;
- Auswerten eines von einem Radarsystem bereitgestellten Sensorsignals;
- Vergleich einer aktuellen Fahrzeugposition, insbesondere einer mittels eines globalen Navigationssatellitensystem bestimmten Fahrzeugposition mit Kartenmaterial;
- Auswerten einer aktuellen Fahrzeuggeschwindigkeit; und/oder
- Auswerten eines drahtlosen Baustellenhinweissignals, insbesondere eines über eine Fahrzeug-zu-X-Kommunikationsschnittstelle übertragenen Baustellenhinweissignals.

4. Verfahren nach einem der Ansprüche 1 bis 3,
**dadurch gekennzeichnet, dass**
der festgelegte Wert in Abhängigkeit eines Fahrbahnzustands, insbesondere eines Straßenbelags und/oder von auf der Fahrbahn (4) detektierter Nässe (5) verändert wird.

5. Verfahren nach Anspruch 4,
**dadurch gekennzeichnet, dass**
zum Erkennen des Fahrbahnzustands Sensordaten wenigstens einer Fahrzeugkamera und eines Laserscanners fusioniert werden.

6. Verfahren nach einem der Ansprüche 1 bis 5,
**dadurch gekennzeichnet, dass**
bei Detektieren wenigstens eines weiteren in einem Fahrzeugumfeld befindlichen Verkehrsteilnehmers (6) eine Beleuchtung wenigstens eines festgelegten Bereichs (7) des Lichtbilds (3), insbesondere des unteren Lichtfelds (3.2) gezielt ausgespart wird.

7. Verfahren nach einem der Ansprüche 1 bis 6,
**dadurch gekennzeichnet, dass**
zum Ausstrahlen des Lichtbilds (3) wenigstens ein LED-Scheinwerfer, insbesondere ein Matrixscheinwerfer verwendet wird.

8. Fahrzeug (8) mit wenigstens einem Scheinwerfer (9), einem Umfeldüberwachungssystem und einer Recheneinheit,
**dadurch gekennzeichnet, dass**
die Recheneinheit dazu eingerichtet ist ein Verfahren nach einem der Ansprüche 1 bis 7 auszuführen.

## Claims

1. Method for adjusting vehicle lighting when driving on a construction site (1), a light image (3) cast into a surroundings by at least one vehicle headlight (2) being adjusted from an upper (3.1) light field referred to as a high beam and a lower light field (3.2) referred to as a low beam when driving on the construction site (1) is detected, by changing a light intensity with which the light image (3) is generated,
the light intensity with which the low beam is emitted being increased to a specified value when driving on the construction site (1),
**characterized in that**
when an exit is detected, the focus of the light image is shifted to a surrounding region corresponding to the exit, or the area occupied by the light image is expanded so that the surrounding region corresponding to the exit is also illuminated at least in part.

2. Method according to claim 1,
**characterized in that**
the light intensity with which the high beam is emitted is reduced when driving on the construction site (1), or the high beam is deactivated.

3. Method according to either claim 1 or claim 2,
**characterized in that**
driving on the construction site (1) is detected by at least one of the following methods:
evaluating at least one camera image generated by a vehicle camera;
- evaluating a sensor signal provided by a radar system;
- comparing a current vehicle position, in particular a vehicle position determined by means of a global navigation satellite system, with map material;
- evaluating a current vehicle speed; and/or
- evaluating a wireless construction site warning signal, in particular a construction site warning signal transmitted via a vehicle-to-X communication interface.

4. Method according to any of claims 1 to 3,
**characterized in that**
the specified value is changed depending on a road condition, in particular a road surface and/or wetness (5) detected on the road (4).

5. Method according to claim 4,
**characterized in that**
in order to detect the road condition, sensor data from at least one vehicle camera and a laser scanner are fused.

6. Method according to any of claims 1 to 5,
**characterized in that**
upon detection of at least one further road user (6) located in the vehicle surroundings, illumination of at least one specified region (7) of the light image (3), in particular of the lower light field (3.2), is omitted in a targeted manner.

7. Method according to any of claims 1 to 6,
**characterized in that**
at least one LED headlight, in particular a matrix headlight, is used to emit the light image (3).

8. Vehicle (8) comprising at least one headlight (9), a surroundings monitoring system and a computing unit,
**characterized in that**
the computing unit is configured to carry out a method according to any of claims 1 to 7.

## Revendications

1. Procédé pour l'adaptation d'un éclairage de véhicule lors de la circulation sur un chantier (1), dans lequel une image lumineuse (3) projetée dans un environnement par au moins un feu de véhicule (2), constituée d'un champ lumineux supérieur (3.1) appelé feu de route et d'un champ lumineux inférieur (3.2) appelé feu de croisement, est adaptée lors d'une reconnaissance de la circulation sur un chantier (1), en modifiant une intensité lumineuse avec laquelle l'image lumineuse (3) est générée,
dans lequel
l'intensité lumineuse avec laquelle le feu de croisement est émis est augmentée à une valeur fixée lors de la circulation sur le chantier (1),
**caractérisé en ce que**
lors de la reconnaissance d'une sortie, un centre de gravité d'image lumineuse est déplacé dans une zone environnante correspondant à la sortie, ou la surface occupée par l'image lumineuse est élargie de sorte que la zone environnante correspondant à la sortie est également éclairée au moins dans certaines zones.

2. Procédé selon la revendication 1,
**caractérisé en ce que**
l'intensité lumineuse avec laquelle le feu de route est émis est réduite ou le feu de route est désactivé lors de la circulation sur le chantier (1).

3. Procédé selon la revendication 1 ou 2,
**caractérisé en ce que**
la circulation sur le chantier (1) est reconnue par au moins l'une des méthodes suivantes :
évaluation d'au moins une image de caméra générée par une caméra de véhicule ;
- évaluation d'un signal de capteur fourni par un système formant radar ;
- comparaison d'une position de véhicule actuelle, en particulier d'une position de véhicule déterminée au moyen d'un système mondial de navigation par satellite, avec des cartes ;
- évaluation d'une vitesse de véhicule actuelle ; et/ou
- évaluation d'un signal d'indication de chantier sans fil, en particulier un signal d'indication de chantier transmis par l'intermédiaire d'une interface de communication de véhicule à X.

4. Procédé selon l'une des revendications 1 à 3,
**caractérisé en ce que**
la valeur fixée est modifiée en fonction d'un état de chaussée, en particulier d'un revêtement routier et/ou de l'humidité (5) détectée sur la chaussée (4).

5. Procédé selon la revendication 4,
**caractérisé en ce que**
pour la reconnaissance de l'état de chaussée, des données de capteur d'au moins une caméra de véhicule et d'un balayeur laser sont fusionnées.

6. Procédé selon l'une des revendications 1 à 5,
**caractérisé en ce que**
lors d'une détection d'au moins un autre usager de la voie publique (6) se trouvant dans un entourage de véhicule, un éclairage d'au moins une zone fixée (7) de l'image lumineuse (3), en particulier du champ lumineux inférieur (3.2), est évité de manière ciblée.

7. Procédé selon l'une des revendications 1 à 6,
**caractérisé en ce que**
pour l'émission de l'image lumineuse (3), au moins un feu à LED, en particulier un feu matriciel, est utilisé.

8. Véhicule (8) comportant au moins un feu (9), un système de surveillance d'entourage et une unité de calcul,
**caractérisé en ce que**
l'unité de calcul est configurée pour mettre en oeuvre un procédé selon l'une des revendications 1 à 7.
